# EUROPEAN PATENT SPECIFICATION

(11) **EP 2 187 099 B1**
(45) Date of publication and mention of the grant of the patent: **23.05.2012**
(21) Application number: 09725939.4
(22) Date of filing: 17.03.2009
(51) Int. Cl.: F16H 57/04

(54) **LUBRICATION STRUCTURE OF GEAR TRAIN ENCASED IN GEAR CASE**
SCHMIERSTRUKTUR FÜR EINEN IN EINEM GETRIEBEKASTEN EINGEKAPSELTEN GETRIEBEZUG
STRUCTURE DE LUBRIFICATION D'UN TRAIN D'ENGRENAGES SE TROUVANT DANS UN CARTER D'ENGRENAGES

(30) Priority: 28.03.2008 JP 2008088109
(43) Date of publication of application: 19.05.2010
(73) Proprietor: Mitsubishi Heavy Industries, Ltd., Tokyo 108-8215 (JP)
(72) Inventor: FUJIMOTO, Akihiko, Sagamihara-shi Kanagawa 229-1193 (JP); OKABE, Kazunari, Sagamihara-shi Kanagawa 229-1193 (JP)
(74) Representative: Henkel, Breuer & Partner
(86) International application number: PCT/JP2009/055727
(87) International publication number: WO 2009/119531

(56) References cited:
- JP-A- 9 100 899
- JP-A- 11 218 213
- JP-A- 2001 074 128
- JP-A- 2004 324 663
- JP-A- 2005 201 316
- JP-A- 2006 064 056
- JP-U- 3 108 530
- JP-U- 7 041 128
- JP-U- 63 173 561
- US-A- 1 220 810

## Description

### Technical Field

The present invention relates to a lubrication structure of a gear train encased in a gear case applied to a transfer drive device of a battery-powered forklift and the like, and particularly, to a lubrication structure of a gear train in which the gear case encases a first gear meshing with a second gear having a diameter larger than that of the first gear.

### Background Art

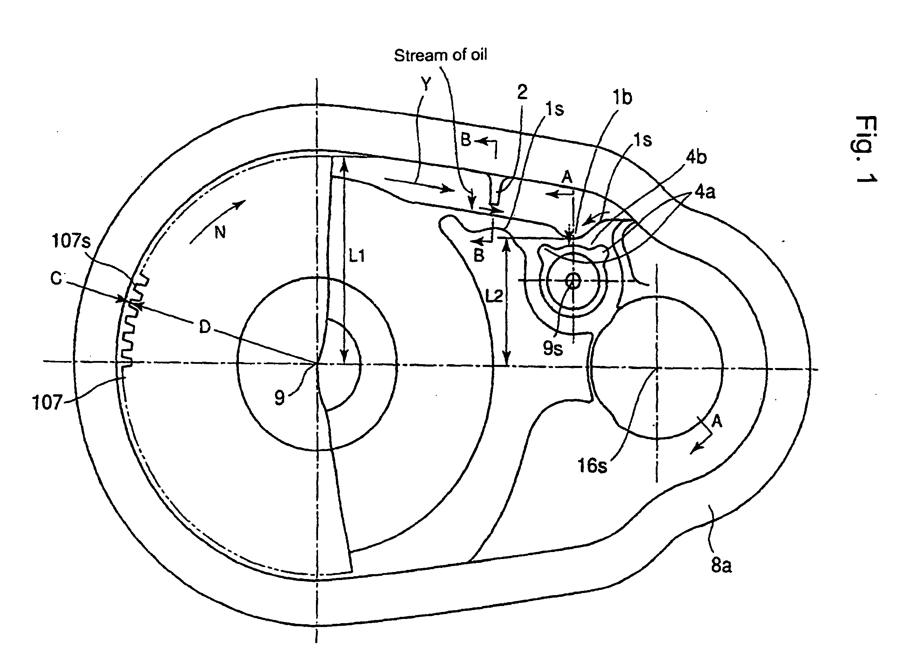

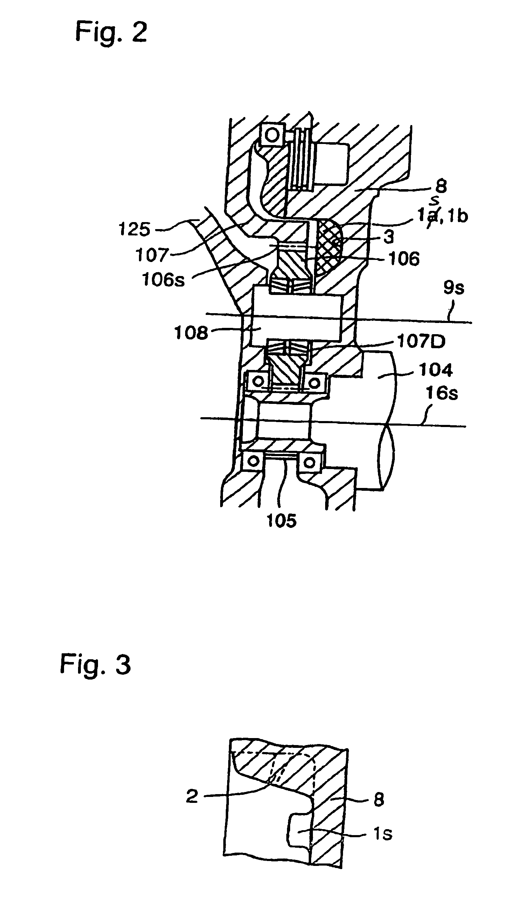

Figs. 1 and 2 are partial configuration diagrams showing a transfer drive device according to embodiments of the invention, where Fig. 1 is a schematic side view showing a transfer drive device (a decelerator interposed between a drive motor and a vehicle wheel) of a battery-powered forklift, and Fig. 2 is a sectional view taken along the line A-A in Fig. 1 (these are embodiments of the invention, but the generally known points will be described first).

In the transfer drive device of the battery-powered forklift, an output shaft 104 of a motor is fitted to the first stage gear 105 while being faucet-fitted to a hole provided in the gear case 8 of the transfer drive device.

The first stage gear 105 meshes with an intermediate gear 106, and the intermediate gear 106 meshes with a bowl-shaped third stage gear (reduction spur gear) 107 having a large diameter. Accordingly, a first speed reduction of a rotation of the motor is performed.

In addition, in the transfer drive device, as shown in Fig. 1, the upper portion of the first stage gear 105 having an axis 16s meshes with the intermediate gear 106 having an axis 9s, and a third stage gear 107 having an axis 9 meshes with the lower portion of the intermediate gear 106.

Accordingly, in the transfer drive device, the lubrication of the first stage gear 105, the intermediate gear 106, the third stage gear 107, and the bearing portion 107D is performed by an oil splash feeding operation of oil collected in the lower portion inside the gear case 8.

JP 2005-201316A, JP 09100899 A and US 1220810 A disclose gear cases wherein oil is collected from the sump by a large-diameter gear and supplied to adjacent components, in particular to a small-diameter gear in mesh with the other gear.

In addition, Patent Document 1 (Japanese Patent Application Laid-Open No. 2006-070912) discloses a technology for a lubrication structure of a transmission unit. That is, in a differential gear box constituting a transmission, there are provided a bearing member rotatably supported to the gear box, a lubricant pipe provided between a rotary shaft of the gear box and another rotary shaft so as to supply lubricant therebetween, and a rib-shaped pedestal formed in a housing so as to guide lubricant to the bearing member and to fix the lubricant pipe.

When the lubrication structure of the transmission unit is applied to the transfer drive device of the battery-powered forklift, as shown in Fig. 1, in the case of the structure in which the intermediate gear 106 having the axis 9s meshes with the first gear 105 having the axis 16s and the third stage gear 107 having the axis 9 meshes therewith, the axis 9s of the intermediate gear 106 is located above the axis 9 of the third stage gear 107. Accordingly, particularly, as shown in Fig. 1, in the case where the third stage gear 107 rotates in the right direction, oil inside the gear case 8 of the transfer drive device is difficult to bring directly into contact with the bearing portion 107D and the intermediate gear 106 located at the upper position, and hence the oil supply state is poor. For this reason, a countermeasure to the poor oil supply state has been demanded.

### Summary of the Invention

The present invention is contrived in consideration of the above-described problems of the background art, and an object of the invention is to provide a lubrication structure of a gear train encased in a gear case designed to prevent occurrence of problems such as poor lubrication and seizure of a bearing portion and a gear train in such a manner that a first gear is provided, a second gear is provided above the first gear in a direction perpendicular to an axis of the first gear and has a diameter smaller than that of the first gear, a gear train is obtained by the gears meshing with each other as in the gear case of the transfer drive device, and then a sufficient amount of lubricant is normally supplied to the upper second gear.

In order to achieve the above-described object of the invention, there is provided a gear case in accordance with claim 1. Preferred embodiments thereof are defined in the dependent claims.

According to the invention, oil inside an oil chamber below the first gear is pumped up with a movement of gear teeth forming a minute gap by a rotation of the first gear, and the pumped oil is discharged into a space above the first gear and inside the gear case, and an oil receiver for receiving the pumped oil is provided in such a manner that a rib is provided in the upper portion of the second gear to receive the pumped oil and a recess is surrounded by the rib.

Accordingly, the oil inside the oil chamber is pumped up with the movement of the gear teeth forming the minute gap of the outer periphery of the first gear by the rotation of the first gear having a large diameter, and is discharged into the upper space inside the gear case due to the centrifugal force by the rotation of the first gear.

In addition, the upper portion of the second gear is provided with the oil receiver including the rib for receiving the pumped oil and the recess formed by the rib. The pumped oil is received in the oil receiver, and is supplied to lubricate the gear tooth portion and the bearing portion of the second gear. That is, the oil is pumped up by the centrifugal force by the rotation of the first gear, the pumped oil is received in the oil receiver provided in the upper portion of the second gear, and then the oil is supplied to lubricate the gear tooth portion of the second gear. Accordingly, it is possible to effectively and economically use the oil. Also, since a sufficient amount of lubricant is supplied to the upper second gear, it is possible to prevent occurrence of problems such as poor lubrication and seizure of the gear train and the bearing portion.

When the vertical height L2 of the oil receiver from the axis of the first gear is set to be smaller than the radius L1 of the first gear, it is possible to smoothly supply the oil pumped by the outer periphery of the first gear to the lower oil receiver.

Further, oil inside an oil chamber below the first gear is pumped up with a movement of gear teeth forming a minute gap by a rotation of the first gear, and the pumped oil is discharged into a space above the first gear and inside the gear case. The upper portion of the second gear is preferably provided with a contact plate which comes into contact with the pumped oil, and turbulence of the oil inside the gear case is suppressed by the contact plate. Accordingly, the pumped oil comes into contact with the contact plate. Therefore, the disturbance of the stream is removed, and tiny oil droplets are captured, thereby suppressing the turbulence. Subsequently, the pumped oil is supplied to the second gear.

### Brief Description of the Drawings

Fig. 1 is a schematic side view showing a transfer device of a battery-powered forklift according to an embodiment of the invention.
Fig. 2 is a sectional view taken along the line A-A in Fig. 1.
Fig. 3 is a sectional view showing a second embodiment and taken along the line B-B in Fig. 1.

### Detailed Description of the Preferred Embodiments

Hereinafter, exemplary embodiments of the invention will be described in detail with reference to the accompanying drawings. However, the dimensions, materials, shapes, and relative arrangement of the constituents described in these embodiments are not used to limit the scope of the invention unless a particular description is made, and are merely examples of the invention.

Fig. 1 is a schematic side view showing a transfer device of a battery-powered forklift according to an embodiment of the invention. Fig. 2 is a sectional view taken along the line A-A in Fig. 1. Fig. 3 is a sectional view taken along the line B-B in Fig. 1.

In addition, Fig. 1 only shows a configuration of a gear case 8 of a transfer drive device, where a first stage gear 105, an intermediate gear 106, and the like provided therein are not shown.

In Figs. 1 and 2, in a gear case 8 of the transfer drive device, an output shaft 104 of a motor is fitted to the first stage gear 105 while being faucet-fitted to a hole provided in the gear case 8 of the transfer drive device.

The upper portion of the first stage gear 105 having an axis 16s meshes with the intermediate gear 106 having an axis 9s, and a third stage gear 107 having an axis 9 meshes with the lower portion of the intermediate gear 106. Accordingly, a first speed reduction of a rotation of the motor is performed.

Accordingly, in the transfer drive device, since the intermediate gear 106 having the axis 9s is located above the first stage gear 105 having the axis 16s and the third stage gear 107 having the axis 9, an oil splash feeding operation as in the background art is not performed.

### [First Embodiment]

Therefore, the invention has the following configuration.

In Figs. 1 and 2, the upper portion of the first stage gear 105 having an axis 16s meshes with the intermediate gear 106 having an axis 9s, and a third stage gear 107 having an axis 9 meshes with the lower portion of the intermediate gear 106.

Accordingly, by means of the right direction rotation (a direction N in Fig. 1) of the third stage gear 107, oil in the lower space of the gear case 8 of the transfer drive device is pumped up by the movement of the gear teeth of the third stage gear 107 forming a minute gap C between the inner peripheral portion of the gear case 8 of the transfer drive device and a gear tooth tip 107s of the third stage gear 107.

The pumped oil scatters inside the gear case 8 of the transfer drive device as depicted by the arrow Y in Fig. 1 by the rotation of the third stage gear 107, is collected by a rib 1s formed in the upper portion of the intermediate gear 106 having the axis 9s along an inner surface 3 of the gear case 8 of the transfer drive device, and then is received in a recess (oil receiver) 1b surrounded by the rib 1s.

Since the oil receiver 1b is formed in such a manner that the rib 1s is enlarged into two ribs in a radial shape and the recess 1b is formed between the ribs 1s, it is possible to effectively seize the pumped oil in the oil receiver 1b formed as the recess 1b surrounded by two ribs 1s.

In addition, the upper portion of the intermediate gear 106 having the axis 9s is provided with bosses 4a and 4a and a recess (second oil receiver) 4b surrounded by the bosses 4a and 4a for the purpose of further receiving the pumped oil. As shown in Fig. 2, the pumped oil received therein is supplied to lubricate a bearing portion 107D of the intermediate gear 106 having the axis 9s.

Further, in this case, the vertical height L2 of the oil receiver 1b from the axes of the third stage gear 107 having the axis 9 and the first gear 105 having the axis 16s is set to be smaller than the radius D/2=L1 of the third stage gear 107, it is possible to smoothly supply the oil pumped from the outer periphery of the third stage gear 107 having the axis 9 to the lower oil receiver 1b.

Furthermore, as shown in Fig. 2, since a surface 3 of the bosses 4a and 4a of the oil receiver 1b and an inner surface 107 of the gear case 8 of the transfer drive device corresponding to the intermediate gear 106 having the axis 9s are formed as a common integral processing surface, it is possible to process the inner surface 3 of the bosses 4a and 4a of the oil receiver 1b together with the inner surface 107 of the gear case 8 of the transfer drive device, and thus to simplify the processing operation.

Accordingly, oil is pumped up by the centrifugal force in accordance with the rotation of the third stage gear 107, the pumped oil is received in the oil receiver 1b provided in the upper portion of the intermediate gear 106 having the axis 9s, and then the oil is supplied to lubricate the bearing portion 107D of the intermediate gear 106 having the axis 9s, thereby effectively and economically using the oil. Also, since a sufficient amount of oil is normally supplied to the upper intermediate gear 106 having the axis 9s, it is possible to prevent occurrence of problems such as poor lubrication and seizure of the gear train.

### [Second Embodiment]

Further, in a second embodiment of the invention, as shown in Figs. 1 and 3, in addition to the first embodiment, by means of the rotation of the third stage gear 107, oil below the third stage gear 107 having the axis 9 and inside the gear case 8 of the transfer drive device is pumped up by the movement of the gear teeth 107s as in the first embodiment, and the pumped oil is discharged into the space above the intermediate gear 106 having the axis 9s and inside the gear case 8 of the transfer drive device. Also, the upper portion of the intermediate gear 106 is provided with a contact plate 2 which comes into contact with the pumped oil, and the turbulence of the oil inside the gear case 8 of the transfer drive device is suppressed by the contact plate 2.

With the above-described configuration, since the pumped oil comes into contact with the contact plate 2, the disturbance of the stream is removed, and tiny oil droplets are captured, thereby suppressing the turbulence. Subsequently, the pumped oil is supplied to the upper portion of the intermediate gear 106.

### Industrial Applicability

According to the invention, in a gear train structure in which a gear case encases a first gear meshing with a second gear having a diameter smaller than that of the first gear, a sufficient amount of lubricant is normally supplied to the upper second gear. As a result, it is possible to provide a lubrication structure of a gear train encased in a gear case designed to prevent occurrence of problems such as poor lubrication and seizure of a bearing portion and a gear train.

## Claims

1. A gear case (8) for a transfer drive device including a lubrication structure of a gear train encased in the gear case (8), comprising:
a first gear (107) having a first axis (9); and
a second gear (106) having a second axis (9s) which is disposed higher than that of the first gear (107) in the vertical direction when the gear case (8) is arranged in an upright orientation and looked at in a direction of the first and second axes (9,9s), said second gear (106) meshing with said first gear (107) to form part of the gear train and having a diameter that is smaller than that of the first gear (107);
wherein the first gear (107) is disposed such that a minute gap (C) is formed between an inner peripheral portion of the gear case (8) and a gear tooth tip (107s) at an outer diameter of the first gear (107), wherein oil inside an oil chamber in a space of the gear case (8) below the first gear (107) is pumped up in operation during rotation of the first gear (107) with a movement of the gear teeth of the first gear (107) forming the minute gap (C) and is discharged into a space of the gear case (8) above the first gear (107), and
wherein an oil receiver (1) for collecting the oil discharged into the space of the gear case (8) above the first gear (107) is formed by a rib (1s) that is formed in an inner surface of the gear case (8) at a portion above the second axis (9s) of the second gear (106) and defines a recess (1b) for receiving the pumped oil, said recess (1b) being formed such that the oil is supplied from the recess (1b) to lubricate a bearing portion (107D) of the second gear (106).

2. The gear case (8) according to claim 1,
wherein the recess (1b) of the oil receiver (1) is provided between a pair of laterally spaced rounded portions of the rib (1s).

3. The gear case (8) according to claim 1 or 2,
wherein a vertical height (L2) of the recess (1b) of the oil receiver (1) from the axis (9) of the first gear (107) is set to be smaller than a radius (L1) of the first gear (107).

4. The gear case (8) according to any one of claims 1 to 3,
wherein the recess (1b) of the oil receiver (1) for receiving the pumped oil is formed in the inner surface of the gear case (8) vertically above and rearward of the bearing portion (107D) of the second gear (106).

5. The gear case (8) according to any one of claims 1 to 4,
wherein a contact plate (2) is provided in the space of the gear case (8) above the first gear (107) so as to capture droplets of the oil discharged from the minute gap (C) to suppress turbulence of the oil inside the gear case (8) and form a stream of oil directed downward.

## Patentansprüche

1. Ein Getriebegehäuse (8) für eine Transferantriebsvorrichtung einschließlich einer Schmierstruktur eines in dem Getriebegehäuse (8) eingeschlossenen Getriebezugs mit:
einem ersten Zahnrad (107) mit einer ersten Achse (9), und
einem zweiten Zahnrad (106) mit einer zweiten Achse (9s), welche in vertikaler Richtung höher angeordnet ist als die des ersten Zahnrads (107), wenn das Getriebegehäuse (8) in einer aufrechten Orientierung angeordnet ist und man in einer Richtung der ersten und der zweiten Achse (9, 9s) blickt, wobei das zweite Zahnrad (106) mit dem ersten Zahnrad (107) in Eingriff ist, um einen Teil des Getriebezugs zu bilden, und einen Durchmesser aufweist, der kleiner ist als der des ersten Zahnrads (107),
wobei das erste Zahnrad (107) derart angeordnet ist, dass ein sehr kleiner Spalt (C) zwischen einem inneren Umfangsabschnitt des Getriebegehäuses (8) und einer Zahnradzahnspitze (107s) an einem Außendurchmesser des ersten Zahnrads (107) gebildet ist, wobei Öl in einer Ölkammer in einem Raum des Getriebegehäuses (8) unter dem ersten Zahnrad (107) im Betrieb bei Rotation des ersten Zahnrads (107) mit einer Bewegung der Zahnradzähne des ersten Zahnrads (107), welche den sehr kleinen Spalt (C) bilden, hochgepumpt wird, und in einen Raum des Getriebegehäuses (8) über dem ersten Zahnrad (107) ausgetragen wird, und
wobei ein Ölempfänger (1) zum Sammeln des Öls, welches in den Raum des Getriebegehäuses (8) über dem ersten Zahnrad (107) ausgetragen wird, durch eine Rippe (1s) gebildet ist, die in einer inneren Oberfläche des Getriebegehäuses (8) an einem Abschnitt oberhalb der zweiten Achse (9s) des zweiten Zahnrads (106) gebildet ist und eine Ausnehmung (1b) zum Empfangen des gepumpten Öls definiert, wobei die Ausnehmung (1b) derart ausgebildet ist, dass das Öl von der Ausnehmung (1b) zum Schmieren eines Lagerabschnitts (107D) des zweiten Zahnrads (106) zugeführt wird.

2. Das Getriebegehäuse (8) gemäß Anspruch 1,
wobei die Ausnehmung (1b) des Ölempfängers (1) zwischen einem Paar lateral beabstandeter gerundeter Abschnitte der Rippe (1s) vorgesehen ist.

3. Das Getriebegehäuse (8) gemäß Anspruch 1 oder 2,
wobei eine vertikale Höhe (L2) der Ausnehmung (1b) des Ölempfängers (1) von der Achse (9) des ersten Zahnrads (107) kleiner als ein Radius (L1) des ersten Zahnrads (107) eingestellt ist.

4. Das Getriebegehäuse (8) gemäß einem der Ansprüche 1 bis 3,
wobei die Ausnehmung (1b) des Ölempfängers (1) zum Aufnehmen des gepumpten Öls in der inneren Oberfläche des Getriebegehäuses (8) vertikal über und hinter dem Lagerabschnitt (107D) des zweiten Zahnrads (106) ausgebildet ist.

5. Das Getriebegehäuse (8) gemäß einem der Ansprüche 1 bis 4,
wobei eine Kontaktplatte (2) in dem Raum des Getriebegehäuses (8) über dem ersten Zahnrad (107) so vorgesehen ist, dass sie Tropfen des von dem kleinen Spalt (C) ausgetragenen Öls fängt, um Verwirbelungen des Öls innerhalb des Getriebegehäuses (8) zu unterdrücken und um einen abwärts gerichteten Ölfluss zu bilden.

## Revendications

1. Carter d'engrenages (8) pour un dispositif d'entraînement de transfert comprenant une structure de lubrification d'un train d'engrenages se trouvant dans le carter d'engrenages (8), comprenant :
un premier engrenage (107) ayant un premier axe (9) ; et
un second engrenage (106) ayant un second axe (9s) qui est placé plus haut que celui du premier engrenage (107) dans le sens vertical lorsque le carter d'engrenages (8) est agencé selon une orientation verticale et vu dans le sens des premier et second axes (9, 9s), ledit second engrenage (106) s'engrenant avec ledit premier engrenage (107) pour former une partie du train d'engrenages et présentant un diamètre qui est inférieur à celui du premier engrenage (107) ;
dans lequel le premier engrenage (107) est placé de façon telle qu'un espace minuscule (C) est formé entre la partie périphérique interne du carter d'engrenages (8) et la pointe d'une dent d'engrenage (107s) sur le diamètre extérieur du premier engrenage (107), dans lequel l'huile située à l'intérieur d'une chambre d'huile dans un espace du carter d'engrenages (8) situé en dessous du premier engrenage (107) est pompée en service pendant la rotation du premier engrenage (107) avec un mouvement des dents d'engrenage du premier engrenage (107) formant l'espace minuscule (C) et est refoulée dans un espace du carter d'engrenages (8) situé au-dessus du premier engrenage (107), et
dans lequel un réservoir d'huile (1) destiné à recueillir l'huile refoulée dans l'espace du carter d'engrenages (8) situé au-dessus du premier engrenage (107) est formé par une nervure (1s) qui est formée dans une surface interne du carter d'engrenages (8) dans une partie située au-dessus du second axe (9s) du second engrenage (106) et définit un évidement (1b) destiné à recevoir l'huile pompée, ledit évidement (1b) étant formé de sorte que l'huile est délivrée depuis l'évidement (1b) pour lubrifier la partie palier (107D) du second engrenage (106).

2. Carter d'engrenages (8) selon la revendication 1, dans lequel l'évidement (1b) du réservoir d'huile (1) est prévu entre une paire de parties arrondies et latéralement espacées de la nervure (1s).

3. Carter d'engrenages (8) selon la revendication 1 ou 2,
dans lequel la hauteur verticale (L2) de l'évidement (1b) du réservoir d'huile (1) à partir de l'axe (9) du premier engrenage (107) est définie comme étant inférieure au rayon (L1) du premier engrenage (107).

4. Carter d'engrenages (8) selon l'une quelconque des revendications 1 à 3,
dans lequel l'évidement (1b) du réservoir d'huile (1) destiné à recevoir l'huile pompée est formé dans la surface interne du carter d'engrenages (8) située verticalement au-dessus et à l'arrière de la partie palier (107D) du second engrenage (106).

5. Carter d'engrenages (8) selon l'une quelconque des revendications 1 à 4,
dans lequel une plaque de contact (2) est prévue dans l'espace du carter d'engrenages (8) situé au-dessus du premier engrenage (107) de manière à capturer des gouttelettes de l'huile refoulée depuis l'espace minuscule (C) afin de supprimer les turbulences de d'huile à l'intérieur du carter d'engrenages (8) et former un flux d'huile dirigé vers le bas.
